# EUROPEAN PATENT APPLICATION

(11) **EP 3 869 589 A1**
(43) Date of publication of application: **25.08.2021**
(21) Application number: 20802152.7
(22) Date of filing: 29.04.2020
(51) Int. Cl.: H01M 4/1391, H01M 4/04, H01M 4/62, H01M 4/131, H01M 10/052

(54) **METHOD FOR MANUFACTURING CATHODE FOR SECONDARY BATTERY, CATHODE MANUFACTURED THEREBY, AND LITHIUM SECONDARY BATTERY COMPRISING SAME CATHODE**

(30) Priority: 03.05.2019 KR 20190051914
(71) Applicant: LG ENERGY SOLUTION, LTD., Seoul 07335 (KR)
(72) Inventor: CHAE, Oh Byong, Daejeon 34122 (KR); WOO, Sang Wook, Daejeon 34122 (KR); KIM, Ye Ri, Daejeon 34122 (KR)
(74) Representative: Hoffmann Eitle
(86) International application number: PCT/KR2020/005725
(87) International publication number: WO 2020/226354

(57) **Abstract**

The present invention relates to a method of preparing a positive electrode for a secondary battery which includes preparing a positive electrode in which a positive electrode active material layer including a lithium transition metal oxide is formed on a positive electrode collector, and pre-lithiating the positive electrode by impregnating the positive electrode in an electrolyte solution containing a film-forming additive and performing charge and discharge using a counter electrode.

## Description

### TECHNICAL FIELD

### Cross-reference to Related Applications

This application claims priority from Korean Patent Application No. 10-2019-0051914, filed on May 3, 2019, the disclosure of which is incorporated by reference herein.

### Technical Field

The present invention relates to a method of preparing a positive electrode for a secondary battery, a positive electrode prepared thereby, and a lithium secondary battery including the positive electrode.

### BACKGROUND ART

Recently, with the rapid spread of electronic devices using batteries, such as mobile phones, notebook computers, and electric vehicles, demand for secondary batteries with relatively high capacity as well as small size and lightweight has been rapidly increased. Particularly, since a lithium secondary battery is lightweight and has high energy density, the lithium secondary battery is in the spotlight as a driving power source for portable devices. Accordingly, research and development efforts for improving performance of the lithium secondary battery have been actively conducted.

In the lithium secondary battery in a state in which an organic electrolyte solution or a polymer electrolyte solution is filled between a positive electrode and a negative electrode which are respectively formed of active materials capable of intercalating and deintercalating lithium ions, electrical energy is produced by oxidation and reduction reactions when the lithium ions are intercalated/deintercalated into/from the positive electrode and the negative electrode.

Lithium cobalt oxide (LiCoO₂), lithium nickel oxide (LiNiO₂), lithium manganese oxide (LiMnO₂ or LiMn₂O₄, etc.), or a lithium iron phosphate compound (LiFePO₄) has been used as a positive electrode active material constituting the positive electrode of the lithium secondary battery. Also, as a method to improve low thermal stability while maintaining excellent reversible capacity of the LiNiO₂, a lithium composite metal oxide (hereinafter, simply referred to as 'NCM-based lithium composite transition metal oxide'), in which a portion of nickel (Ni) is substituted with cobalt (Co) or manganese (Mn), has been developed. Metallic lithium, a carbon-based material, such as graphite or activated carbon, or a material, such as silicon oxide (SiO_{α}), is being used as a negative electrode active material constituting the negative electrode of the lithium secondary battery. Among these negative electrode active materials, the metallic lithium has initially been mainly used, but, recently, the carbon-based material has been mainly used, because a phenomenon occurs in which the battery is destroyed by damage of a separator which is caused by the growth of lithium atoms on the surface of the metallic lithium as charge and discharge cycles proceed. However, with respect to the carbon-based material, it is disadvantageous in that its capacity is small because its theoretical capacity is only about 400 mAh/g, and thus, various studies have been conducted to replace the carbon-based material by using a silicon (Si)-based material with high theoretical capacity (4,200 mAh/g) as a negative electrode active material.

Theoretically, lithium intercalation and deintercalation reactions in a positive electrode active material layer are completely reversible, but, actually, more lithium is consumed than theoretical capacity of the positive electrode active material, and only a portion of the lithium is recovered during discharge. Thus, after a second cycle, a smaller amount of lithium ions is deintercalated during charge, but most of the deintercalated lithium ions are intercalated during discharge. Thus, a difference in capacity between the first charge and discharge reactions is referred to as an irreversible capacity loss, and, since a commercially available lithium secondary battery is prepared in a state in which lithium ions are supplied from the positive electrode and lithium is not present in the negative electrode, it is important to minimize the irreversible capacity loss during initial charge and discharge.

It is known that this initial irreversible capacity loss of the positive electrode is mainly caused by an electrolyte decomposition reaction on a surface of the active material layer, and an SEI (Solid Electrolyte Interface) is formed on the surface of the active material layer by an electrochemical reaction due to the electrolyte decomposition. Since a large amount of lithium ions is consumed in the formation of the SEI, there is a limitation in that the irreversible capacity loss is caused, but the SEI formed at an initial stage of charging may prevent a reaction of the lithium ions with the active material or other materials during charge and discharge and may act as an ion tunnel that only passes the lithium ions, and thus, the SEI contributes to the improvement of cycle characteristics of the lithium secondary battery by suppressing the further electrolyte decomposition reaction.

Therefore, there is a need for a method to improve the initial irreversibility caused by the formation of the SEI, and one of such methods includes a method of allowing a side reaction generated during the first charge to occur in advance by performing pre-lithiation before the preparation of the lithium secondary battery. As described above, in a case in which the pre-lithiation is performed, when the actually prepared secondary battery is charged and discharged, since the first cycle is performed in a state in which the irreversibility is reduced accordingly, it is advantageous in that the initial irreversibility may be reduced.

Conventional pre-lithiation has mostly been applied to the negative electrode, and a conventional pre-lithiation method, for example, may include a method of depositing lithium on the negative electrode or a method of directly disposing lithium powder on the negative electrode. However, the method of depositing lithium is disadvantageous in that, in order to deposit lithium on the negative electrode, it is expensive to set an apparatus for deposition and, in mass production, processability is poor due to the time required. Also, with respect to the method of directly disposing lithium powder on the negative electrode, there is not only a risk of ignition in a process of handling the lithium powder, but lithium may also not be fully pre-lithiated.

Thus, there is a need to develop a positive electrode for a lithium secondary battery in which more effective pre-lithiation may be performed.

### DISCLOSURE OF THE INVENTION

### TECHNICAL PROBLEM

An aspect of the present invention provides a positive electrode for a lithium secondary battery, which may secure initial reversibility of the positive electrode, may simultaneously prevent loss of capacity, and may improve electrochemical performance, such as excellent initial efficiency and life characteristics, of the lithium secondary battery, a method capable of efficiently preparing the positive electrode, and a lithium secondary battery including the positive electrode.

### TECHNICAL SOLUTION

According to an aspect of the present invention, there is provided a method of preparing a positive electrode for a secondary battery which includes: preparing a positive electrode in which a positive electrode active material layer including a lithium transition metal oxide is formed on a positive electrode collector; and pre-lithiating the positive electrode by impregnating the positive electrode in an electrolyte solution containing a film-forming additive and performing charge and discharge using a counter electrode.

According to another aspect of the present invention, there is provided a positive electrode for a secondary battery prepared according to the above method which includes: a positive electrode collector; a positive electrode active material layer which is formed on the positive electrode collector and includes a lithium transition metal oxide; and a film which is formed on the positive electrode active material layer and is formed by pre-lithiation.

According to another aspect of the present invention, there is provided a lithium secondary battery including: an electrode assembly including the above positive electrode, a negative electrode, and a separator disposed between the positive electrode and the negative electrode; a battery case accommodating the electrode assembly; and an electrolyte injected into the battery case.

### ADVANTAGEOUS EFFECTS

According to the present invention, effective pre-lithiation of a positive electrode may be performed, and, accordingly, initial reversibility of the positive electrode may be secured, loss of capacity may be prevented at the same time, a stable film may be formed, and electrochemical performance, such as excellent initial efficiency and life characteristics, of a lithium secondary battery may be improved.

### MODE FOR CARRYING OUT THE INVENTION

Hereinafter, the present invention will be described in more detail to allow for a clearer understanding of the present invention. In this case, it will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

### <Method of Preparing Positive Electrode and Positive Electrode Prepared>

A method of preparing a positive electrode for a secondary battery of the present invention includes the steps of: preparing a positive electrode in which a positive electrode active material layer including a lithium transition metal oxide is formed on a positive electrode collector; and pre-lithiating the positive electrode by impregnating the positive electrode in an electrolyte solution containing a film-forming additive and performing charge and discharge using a counter electrode.

The method of preparing a positive electrode of the present invention will be described in detail for each step below.

First, a positive electrode, in which a positive electrode active material layer including a lithium transition metal oxide is formed on a positive electrode collector, is prepared.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on a surface of the positive electrode collector to improve adhesion of the positive electrode active material. The positive electrode collector, for example, may be used in various shapes such as that of a film, a sheet, a foil, a net, a porous body, a foam body, a non-woven fabric body, and the like.

The positive electrode active material layer includes a positive electrode active material of a lithium transition metal oxide. As the lithium transition metal oxide, a lithium transition metal oxide typically used as a positive electrode active material of a lithium secondary battery may be used without limitation, and a lithium transition metal oxide including at least one transition metal cation selected from the group consisting of cobalt (Co), nickel (Ni), and manganese (Mn) may be more preferably used. For example, the positive electrode active material may include a layered compound such as lithium cobalt oxide (LiCoO₂) or lithium nickel oxide (LiNiO₂), lithium manganese oxides such as Li₁₊ₙMn₂₋ₙO₄ (where n is 0 to 0.33), LiMnO₃, LiMn₂O₃, and LiMnO₂, Ni-site type lithium nickel oxide represented by the chemical formula LiNi₁₋ₘM^{a}ₘO₂ (where M^{a} = Co, Mn, aluminum (Al), copper (Cu), iron (Fe), magnesium (Mg), boron (B), or gallium (Ga), and m = 0.01 to 0.3), lithium manganese composite oxide represented by the chemical formula LiMn_{2-z}M^{b}_{z}O₂ (where M^{b} = Co, Ni, Fe, chromium (Cr), zinc (Zn), or tantalum (Ta), and z = 0.01 to 0.1) or Li₂Mn₃M^{c}O₈ (where M^{c} = Fe, Co, Ni, Cu, or Zn), spinel-structured lithium manganese composite oxide represented by LiNiᵣMn₂₋ᵣO₄ (where r = 0.01 to 1), and a lithium iron phosphate compound (LiFePO₄), but the positive electrode active material is not limited thereto. Also, a lithium composite transition metal oxide represented by the following Formula 1 may be included as the positive electrode active material.

[Formula 1] LiₐNi_{1-b-c-d}Co_{b}Mn_{c}Q_{d}O_{2+δ}

In Formula 1, Q is at least one element selected from the group consisting of aluminum (Al), zirconium (Zr), titanium (Ti), magnesium (Mg), tantalum (Ta), niobium (Nb), molybdenum (Mo), and chromium (Cr), 0.9≤a≤1.5, 0≤b≤0.5, 0≤c≤0.5, 0≤d≤0.1, and -0.1≤5≤1.0.

Also, the positive electrode active material layer may include a conductive agent and a binder in addition to the above-described positive electrode active material.

In this case, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on a total weight of the positive electrode active material layer.

Furthermore, the binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode. Specifically, a composition for forming a positive electrode active material layer, which includes the above-described positive electrode active material as well as selectively the binder and the conductive agent, is coated on the positive electrode collector, and the positive electrode may then be prepared by drying and rolling the coated positive electrode collector. In this case, types and amounts of the positive electrode active material, the binder, and the conductive agent are the same as those previously described.

The solvent may be a solvent normally used in the art, and may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

Next, the positive electrode is impregnated in an electrolyte solution containing a film-forming additive and charge and discharge are performed using a counter electrode to pre-lithiate the positive electrode.

In the present invention, the positive electrode is pre-lithiated by electrochemical charge and discharge. Since the positive electrode is pre-lithiated by the electrochemical charge and discharge, the positive electrode may not only be more efficiently pre-lithiated in terms of processing time and cost, but a degree of pre-lithiation may also be uniformly and precisely controlled. In this case, since lithium is deintercalated from the positive electrode during charging that increases a voltage, the loss of capacity may be prevented only if the lithium is again intercalated by including a discharge process that reduces the voltage after the charging.

In the present invention, the film-forming additive, which assists film formation during the pre-lithiation of the positive electrode by the electrochemical charge and discharge, is added to the electrolyte solution. Accordingly, a film may be stably formed on a surface of the positive electrode during the pre-lithiation of the positive electrode, and life characteristics of a lithium secondary battery cell, which is prepared by using the positive electrode having the stable film formed thereon, may be improved, even if an addit ive is not added to the electrolyte solution.

The film-forming additive may assist the formation of a positive electrode film, wherein the film-forming additive may specifically include at least one selected from the group consisting of succinonitrile, ethylene glycol bis(propionitrile) ether, adiponitrile, sebaconitrile, fluoroethylene carbonate (FEC), and vinylene carbonate (VC), and may more preferably be succinonitrile.

Any electrolyte solution may be used as the electrolyte solution without particular limitation so long as it may function as a medium through which lithium ions may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the electrolyte solution. Among these solvents, the carbonate-based solvent is preferable, and a mixture of a cyclic carbonate (e.g., ethylene carbonate or propylene carbonate) having high ionic conductivity and high dielectric constant and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of 5:95 to 70:30.

The film-forming additive may be included in an amount of 0.2 wt% to 15 wt% based on the electrolyte solution. The film-forming additive may be preferably included in an amount of 0.5 wt% to 10 wt%, and may be more preferably included in an amount of 1 wt% to 5 wt% based on the electrolyte solution. Since the film-forming additive is included in the above weight ratio, a stable film may be formed on a surface of the positive electrode active material layer and initial efficiency and life characteristics of the lithium secondary battery may be improved by forming the film that is not excessively thick.

Lithium metal, a lithium metal-metal alloy, and lithium metal oxide may be used as the counter electrode during the pre-lithiation, and the lithium metal may be more preferably used.

The pre-lithiation may be performed by charging to 3.5 V to 5.0 V (vs. Li/Li⁺ (based on lithium standard reduction potential) and then discharging to 2.0 V to 3.4 V (vs. Li/Li⁺ (based on lithium standard reduction potential). Preferably, the pre-lithiation may be performed by charging to 4.0 V to 4.5 V (vs. Li/Li⁺ (based on lithium standard reduction potential) and discharging to 2.9 V to 3.2 V (vs. Li/Li⁺ (based on lithium standard reduction potential). Since lithium in the positive electrode is deintercalated when electrochemical charge is performed during the pre-lithiation of the positive electrode, a discharge process must be performed after the charge. In the present invention, since both the charge and discharge processes are performed during the pre-lithiation, both an oxidation film formed during charge and a reduction film formed during discharge may be formed on the surface of the positive electrode active material layer. The oxidation film may be in the form of a chemical bond such as polycarbonate, LiₓPF_{y} (where x is 0 to 1, and y is 1 to 5), OCO²⁻, C-H, C=O, and C-O, and the reduction film may be in the form of a chemical bond such as Li₂CO₃, Li₂O, LiF, LiOH, and CH₂OCO₂Li. Since both the oxidation film and the reduction film are formed, there is an effect where a side reaction does not significantly occur even if an oxidation reaction and a reduction reaction occur. Also, in the present invention, since the discharge is performed after the lithium is deintercalated due to the charge, an amount of the lithium present in the positive electrode after the pre-lithiation is not greater than an amount of the lithium present in the positive electrode before the pre-lithiation. Accordingly, there is an effect where structural collapse of the positive electrode due to excessive lithium does not occur.

The positive electrode prepared according to the present invention as described above includes a positive electrode collector; a positive electrode active material layer which is formed on the positive electrode collector and includes a lithium transition metal oxide; and a film which is formed on the positive electrode active material layer and is formed by pre-lithiation.

The film may include at least one selected from the group consisting of a nitrile-based compound, a fluorine-based compound, and a carbonate-based compound by the film-forming additive contained in the electrolyte solution during pre-lithiation, and may more preferably include the nitrile-based compound.

### <Lithium Secondary Battery>

According to another embodiment of the present invention, an electrochemical device including the positive electrode is provided. The electrochemical device may specifically be a battery or a capacitor, and, for example, may be a lithium secondary battery.

The lithium secondary battery specifically includes an electrode assembly including a positive electrode, a negative electrode disposed to face the positive electrode, and a separator disposed between the positive electrode and the negative electrode; a battery case accommodating the electrode assembly; and an electrolyte injected into the battery case, wherein the positive electrode is the same as the above-described positive electrode pre-lithiated according to the present invention. Also, the lithium secondary battery may further selectively include a battery case accommodating the electrode assembly including the positive electrode, the negative electrode, and the separator, and a sealing member sealing the battery case.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer selectively includes a binder and a conductive agent in addition to the negative electrode active material. The negative electrode active material layer may be prepared by coating a composition for forming a negative electrode in the form of a slurry, which includes selectively the binder and the conductive agent as well as the negative electrode active material, on the negative electrode collector and drying the coated negative electrode collector, or may be prepared by casting the composition for forming a negative electrode on a separate support and then laminating a film separated from the support on the negative electrode collector.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic substance alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{α}(0 < α < 2), SnO₂, vanadium oxide, and lithium vanadium oxide; or a composite including the metallic substance and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Also, the binder and the conductive agent may be the same as those previously described in the positive electrode.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be selectively used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN (C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve lifetime characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

97 wt% of LiCoO₂ as a positive electrode active material, 1 wt% of Denka black (conductive agent), and 2 wt% of polyvinylidene difluoride (PVdF, binder) were added to N-methylpyrrolidone (NMP) to prepare a positive electrode mixture slurry.

One surface of an aluminum current collector was coated with the above-prepared positive electrode mixture slurry, dried, and rolled to prepare a positive electrode.

After the above-prepared positive electrode was cut to a size of 10 cm × 10 cm and then wetted for 3 hours in an electrolyte solution in which 1 wt% of succinonitrile (SN) was added to and 1 M LiPF₆ was dissolved in a solvent in which ethylene carbonate (EC) and ethylmethyl carbonate (EMC) were mixed in a volume ratio of 3:7, pre-lithiation was performed on the positive electrode by electrochemical charge and discharge using lithium metal, as a counter electrode, in a state in which the electrolyte solution was present. In this case, the pre-lithiation process was performed as follows.

[charge at a current of 1.0 mA/cm² (OCV→4.35 V) → rest for 30 minutes → discharge at a current of 1.0 mA/cm² (4.35 V→3.0 V)]

The positive electrode pre-lithiated through the above-described process was washed with EMC and then dried at room temperature to prepare a pre-lithiated positive electrode.

### Example 2

A pre-lithiated positive electrode was prepared in the same manner as in Example 1 except that 3 wt% of succinonitrile (SN) was added.

### Example 3

A pre-lithiated positive electrode was prepared in the same manner as in Example 1 except that 5 wt% of succinonitrile (SN) was added.

### Example 4

A pre-lithiated positive electrode was prepared in the same manner as in Example 1 except that 20 wt% of succinonitrile (SN) was added.

### Example 5

A pre-lithiated positive electrode was prepared in the same manner as in Example 2 except that 3 wt% of fluoroethylene carbonate (FEC) was added instead of 3 wt% of succinonitrile (SN).

### Example 6

A pre-lithiated positive electrode was prepared in the same manner as in Example 2 except that 3 wt% of vinylene carbonate (VC) was added instead of 3 wt% of succinonitrile (SN) .

### Example 7

A pre-lithiated positive electrode was prepared in the same manner as in Example 2 except that 3 wt% of diethyl oxalate was added instead of 3 wt% of succinonitrile (SN).

### Comparative Example 1

A positive electrode was prepared in the same manner as in Example 1 except that succinonitrile (SN) was not added.

### Comparative Example 2

A positive electrode was prepared in the same manner as in Example 1 except that only a charge process was performed as follows during pre-lithiation.

### [charge at a current of 1.0 mA/cm² (OCV→4.35 V)]

### Comparative Example 3

A positive electrode was prepared in the same manner as in Example 1 except that the pre-lithiation process was not performed.

### [Experimental Example 1: Initial Efficiency and Life Characteristics Evaluation]

A polyethylene separator was disposed between each of the positive electrodes prepared in Examples 1 to 7 and Comparative Examples 1 to 3 and Li metal, as a counter electrode, and a coin-type half cell was then prepared by injecting an electrolyte solution in which 1 M LiPF₆ was dissolved in a solvent in which ethylene carbonate (EC) and ethylmethyl carbonate (EMC) were mixed in a volume ratio of 3:7.

Charge/discharge reversibility test was performed on the above-prepared coin-type half cell using an electrochemical charger/discharger. The coin-type half cell was charged by applying a current at a current density of 0.2 C-rate to a voltage of 4.35 V (vs. Li/Li⁺) during charge and discharged at the same current density to a voltage of 3.0 V (vs. Li/Li⁺) during discharge. First cycle charge capacity, first cycle discharge capacity and capacity retention in 200^{th} cycle compared to the first cycle discharge capacity are presented in Table 1.

**[Table 1]**

| | 1^{st} cycle charge capacity (mAh/g) | 1^{st} cycle discharge capacity (mAh/g) | 1^{st} cycle efficiency (%) | capacity retention in 200^{th} cycle (%) |
|---|---|---|---|---|
| Example 1 | 165.1 | 164.6 | 99.7 | 92.3 |
| Example 2 | 165.2 | 164.8 | 99.8 | 93.1 |
| Example 3 | 164.9 | 164.6 | 99.8 | 93.0 |
| Example 4 | 159.7 | 159.2 | 99.2 | 89.3 |
| Example 5 | 164.9 | 163.1 | 98.9 | 87.8 |
| Example 6 | 165.5 | 163.7 | 98.9 | 87.2 |
| Example 7 | 166.3 | 164.1 | 98.7 | 86.9 |
| Comparative Example 1 | 167.3 | 164.3 | 98.2 | 83.2 |
| Comparative Example 2 | 14.3 | 164.9 | 1153.1 | 85.2 |
| Comparative Example 3 | 170.3 | 165.1 | 97.0 | 81.3 |

Referring to Table 1, with respect to Examples 1 to 4, since a stable film was formed by decomposition of succinonitrile (SN) on the surface of the positive electrode during the pre-lithiation of the positive electrode, first cycle efficiencies and capacity retentions in 200^{th} cycle were high. Examples 1 to 3, in which the succinonitrile (SN) had a concentration of 0.2 wt% to 15 wt% during the pre-lithiation, had better first cycle efficiencies and capacity retentions in 200^{th} cycle than Example 4 in which the succinonitrile (SN) had a concentration of greater than 15 wt%. With respect to Example 4, since the concentration of the succinonitrile (SN) was high during the pre-lithiation, an excessively thick film was formed, and thus, the first cycle efficiency and capacity retention in 200^{th} cycle were slightly lower than those of Examples 1 to 3. Also, in a case in which the fluoroethylene carbonate, vinylene carbonate, and diethyl oxalate additives were respectively used as in Examples 5 to 7, capacity retentions in 200^{th} cycle were better than those of Comparative Examples 1 to 3, but were somewhat lower than those of Examples 1 to 4. The reason for this is considered that the additives of Examples 5 to 7 also assisted the formation of the positive electrode film to improve the cycle retentions in comparison to the comparative examples, but, with respect to Examples 1 to 4, a nitrile group formed from the succinonitrile stabilized the positive electrode film, and, accordingly, there is a significant effect of suppressing degradation of the positive electrode.

In contrast, with respect to Comparative Example 1, since there was no succinonitrile (SN) during the pre-lithiation, an unstable film without a nitrile group was formed on the surface, and thus, first cycle efficiency and capacity retention in 200^{th} cycle were significantly lower than those of the examples. With respect to Comparative Example 2, since only the charge was performed during the pre-lithiation, first cycle charge capacity was hardly observed. The reason why first cycle discharge capacity was achieved as much as the examples is that, since it was a half cell, lithium was intercalated into the positive electrode from the lithium metal electrode as the counter electrode. However, if it was used as a full cell, since there was no lithium source even in the negative electrode, it becomes a cell in which capacity itself is not achieved. With respect to Comparative Example 3, since pre-lithiation itself was not performed, a surface film was unstable, and thus, first cycle efficiency and capacity retention in 200^{th} cycle were significantly low.

## Claims

1. A method of preparing a positive electrode for a secondary battery, comprising:
preparing a positive electrode in which a positive electrode active material layer including a lithium transition metal oxide is formed on a positive electrode collector; and
pre-lithiating the positive electrode by impregnating the positive electrode in an electrolyte solution containing a film-forming additive and performing charge and discharge using a counter electrode.

2. The method of claim 1, wherein the film-forming additive comprises at least one selected from the group consisting of succinonitrile, ethylene glycol bis(propionitrile) ether, adiponitrile, sebaconitrile, fluoroethylene carbonate (FEC), and vinylene carbonate (VC).

3. The method of claim 1, wherein the film-forming additive is succinonitrile.

4. The method of claim 1, wherein the film-forming additive is included in an amount of 0.2 wt% to 15 wt% based on the electrolyte solution.

5. The method of claim 1, wherein the pre-lithiating is performed by charging to 3.5 V to 5.0 V based on lithium standard reduction potential.

6. The method of claim 1, wherein the pre-lithiating is performed by discharging to 2.0 V to 3.4 V based on lithium standard reduction potential after the charge.

7. A positive electrode for a secondary battery which is prepared according to claim 1, comprising:
a positive electrode collector;
a positive electrode active material layer which is formed on the positive electrode collector and includes a lithium transition metal oxide; and
a film which is formed on the positive electrode active material layer and is formed by pre-lithiation.

8. The positive electrode for a secondary battery of claim 7, wherein the film comprises at least one selected from the group consisting of a nitrile-based compound, a fluorine-based compound, and a carbonate-based compound.

9. The positive electrode for a secondary battery of claim 7, wherein the film comprises a nitrile-based compound.

10. A lithium secondary battery comprising:
an electrode assembly including the positive electrode of claim 7, a negative electrode, and a separator disposed between the positive electrode and the negative electrode;
a battery case accommodating the electrode assembly; and
an electrolyte injected into the battery case.
